**Europäisches Patentamt**

**European Patent Office**

**Office européen des brevets**

(11) Numéro de publication: **0 247 913**
**B1**

(12) **FASCICULE DE BREVET EUROPEEN**

(45) Date de publication du fascicule du brevet:
30.08.89

(21) Numéro de dépôt: **87400946.7**

(22) Date de dépôt: **23.04.87**

(51) Int. Cl.⁴: **B60T 13/14**

(54) **Dispositif d'assistance hydraulique.**

(30) Priorité: **28.05.86 FR 8607619**

(43) Date de publication de la demande:
**02.12.87 Bulletin 87/49**

(45) Mention de la délivrance du brevet:
**30.08.89 Bulletin 89/35**

(84) Etats contractants désignés:
**DE ES GB IT**

(56) Documents cités:
**EP-A- 0 197 803**
**FR-A- 2 404 552**
**FR-A- 2 424 160**
**FR-A- 2 558 785**

(73) Titulaire: **BENDIX France Société Anonyme dite:,
126, rue de Stalingrad, F-93700 Drancy(FR)**

(72) Inventeur: **Levrai, Roland, 9 Bis Av. Gaston
Monmousseau, F-93240 Stains(FR)**
Inventeur: **Picot, Pascal, 1 Place Jean Jaurès App. 84,
F-94380 Bonneuil sur Marne(FR)**
Inventeur: **Riquart, Christian, 33 rue Fessart,
F-75019 Paris(FR)**

(74) Mandataire: **Lejet, Christian et al, Division Technique
Service Brevets BENDIX Europe 126, rue de Stalingrad,
F-93700 Drancy(FR)**

ACTORUM AG

## Description

La présente invention se rapporte aux dispositifs d'assistance hydraulique de freinage et plus particulièrement à un tel dispositif pour un double circuit de freinage à fonctionnement mixte hydrodynamique (dit "full power") et hydrostatique.

On connaît du document EP-A 0 197 803 (publié le 15.10.1986, date de priorité 27.02.1985) un dispositif d'assistance hydraulique du type dit " full power " comprenant deux moyens de piston délimitant deux chambres de maître-cylindre et comportant chacun un moyen de valve de retour réservoir. Le dispositif comprend, en outre, deux moyens de valve haute pression, un premier intégré dans le premier moyen de piston et un second dans un élément de fermeture de l'alésage du dispositif. Le dispositif peut fonctionner en mode hydrodynamique et, en cas de défaillance d'un circuit haute pression, en mode hydrostatique comme un maître-cylindre conventionnel.

Malgré ses avantages, ce dispositif présente de légers inconvénients en ce que la course pédale perçue par le conducteur du véhicule est trop courte. Les constructeurs de véhicules modernes demandent que la course de pédale soit plus progressive pour améliorer le confort de conduite.

La présente invention a donc pour objet de proposer un dispositif d'assistance hydraulique du type mixte, dit "full power" mais susceptible de fonctionner comme un maître-cylindre conventionel en cas de défaillance d'un circuit haute pression et ayant une course pédale plus progressive.

Pour ce faire, l'invention concerne un dispositif d'assistance hydraulique comprenant un corps comportant un premier alésage dans lequel sont montés coulissant des premier et deuxième pistons, le premier piston étant déplaçable sous l'effet de l'actionnement d'un troisième piston monté coulissant dans le premier alésage, et le deuxième piston étant déplaçable par l'intermédiaire d'une liaison hydrostatique formée dans une chambre de travail définie entre les premier et deuxième pistons à chaque piston étant respectivement associée une valve dans un circuit hydraulique respectif entre une source de fluide sous pression et un circuit de freinage respectif; et une troisième chambre définie dans le premier alésage entre le premier piston et le troisième piston, et reliée à un réservoir de fluide sous basse pression par l'intermédiaire d'une valve se fermant au terme d'une course déterminée du troisième piston.

Selon la présente invention, le dispositif comprend un deuxième alésage dans lequel est monté à coulissement un piston pilote déterminant avec une extrémité fermée de ce deuxième alésage une quatrième chambre en communication hydraulique avec la troisième chambre, l'autre extrémité du deuxième alésage étant en communication hydraulique avec le réservoir de fluide sous basse pression par l'intermédiaire d'une valve commandée en fonction de la pression du fluide de la source de fluide sous pression, le piston pilote étant déplaçable sous l'effet de la pression dans la première chambre à l'encontre d'un premier ressort.

D'autres caractéristiques et avantages de la présente invention ressortiront de la description suivante de deux modes de réalisation donnés à titre illustratif mais nullement limitatif, faite en relation avec les dessins annexés dans lesquels :

- la figure 1 est une vue en coupe longitudinale d'un dispositif d'assistance hydraulique selon un premier mode de réalisation ;
- la figure 2 est une courbe représentative de la course pédale en fonction de l'effort d'entrée du dispositif de la figure 1 ; et
- la figure 3 est une vue en coupe longitudinale d'un dispositif selon un deuxième mode de réalisation.

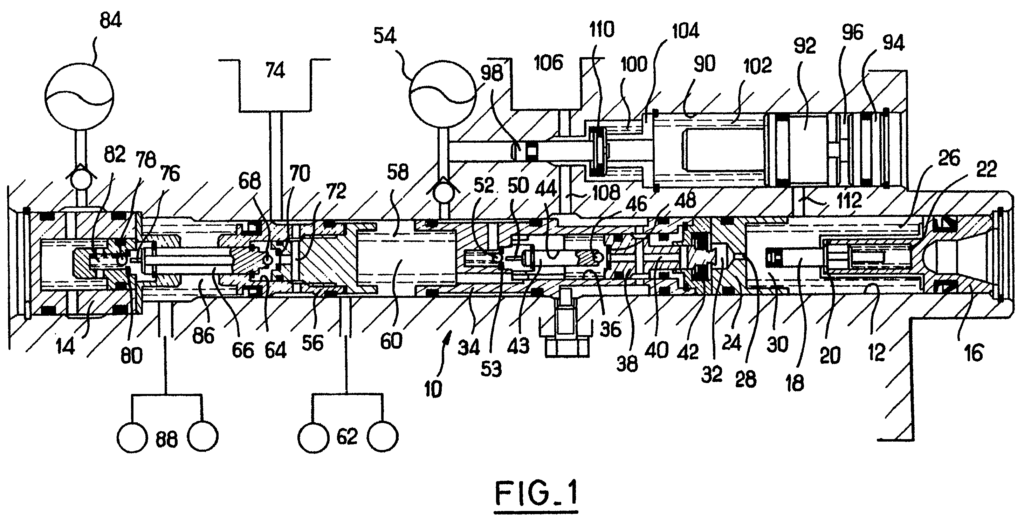

Comme représenté sur la Figure 1 le dispositif d'assistance hydraulique, qui dans l'exemple illustré est un maître-cylindre pour circuits de freinage, comprend un corps 10 comportant un alésage étagé 12 obturé à une extrémité par un élément de fermeture 14. Dans l'alésage 12 est monté à coulissement étanche un premier piston 16 destiné à être relié à une pédale de freinage (non représentée). Dans le premier piston 16 est monté à coulissement un élément de clapet 18 qui est sollicité vers une position en butée contre un épaulement 20 par un ressort 22. Un deuxième piston 24 est monté à coulissement étanche dans l'alésage 12 et est couplé au premier piston 16 par un ressort 26. Le deuxième piston 24 comporte un passage axial 28 qui relie une première chambre 30, définie entre les premier et deuxième pistons 16,24, à une chambre intermédiaire 32.

La chambre intermédiaire 32 est délimitée par un premier moyen de piston 34 qui comporte un alésage étagé 36 dans lequel est monté coulissant un ensemble de clapet 38. L'ensemble de clapet 38 comporte un passage 40 destiné à être fermé par un joint 42 qui vient en butée contre le premier moyen de piston 34 quand l'ensemble de clapet 38 se déplace dans l'alésage 36. Un poussoir 43 est monté à coulissement dans un deuxième alésage axial 44 dans le premier moyen de piston 34 et comporte à une extrémité, une bille 46 destinée à coopérer avec un siège 48 dans l'ensemble de clapet 38. A son autre extrémité le poussoir 42 comporte une tige d'actionnement 50 qui est destinée à dégager une bille 52 de son siège, 53 ouvrant ainsi un passage hydraulique entre une source 54 de fluide sous pression et l'intérieur de l'alésage 36.

Le dispositif comprend, de plus, un deuxième moyen de piston 56 monté à coulissement dans l'alésage 12 et couplé au premier moyen de piston 34 par un ressort 58. Une première chambre de travail 60 est formée entre les premier et deuxième moyens de piston 34,56 et est reliée à un premier circuit de freinage 62. Le deuxième moyen de piston 56 comprend un alésage étagé 64 dans lequel est monté à coulissement avec jeu un poussoir 66 comportant à une extrémité une bille 68 susceptible de fermer un siège 70 dans un passage 72 entre l'alésage étagé 64 et un réservoir basse pression 74. A son autre extrémité, le poussoir 66 comporte une tige d'actionnement 76 susceptible de dégager une bille 78 de son siège 80 dans un passage 82 entre une source de fluide sous pression 84 et une deuxième chambre de travail 86 qui est reliée à un deuxième circuit de freinage 88.

Selon l'invention, le dispositif comprend un alésage étagé 90 disposé à côté de l'alésage 12 et dans lequel est monté à coulissement un piston pilote 92 qui définit, avec un élément de fermeture 94, une chambre 96. Un moyen de clapet 98 est monté à coulissement étanche dans l'alésage 90 et est relié au piston pilote 92 par un ensemble de deux ressorts 100 et 102 et une cage 104 montée fixe dans l'alésage 90. Une extrémité 107 de l'alésage 90 est en communication hydraulique avec la source 54 et l'alésage de l'autre côté du moyen de clapet 98, est en communication hydraulique avec un réservoir basse pression 106 qui est également relié à l'alésage 12 par un passage 108. Le moyen de clapet 98 comporte un joint 110 qui est destiné à fermer le passage hydraulique entre l'alésage 90 et le réservoir 106 lors d'un déplacement du moyen de clapet 98. La chambre 96 est reliée à la première chambre 30 par un passage 112.

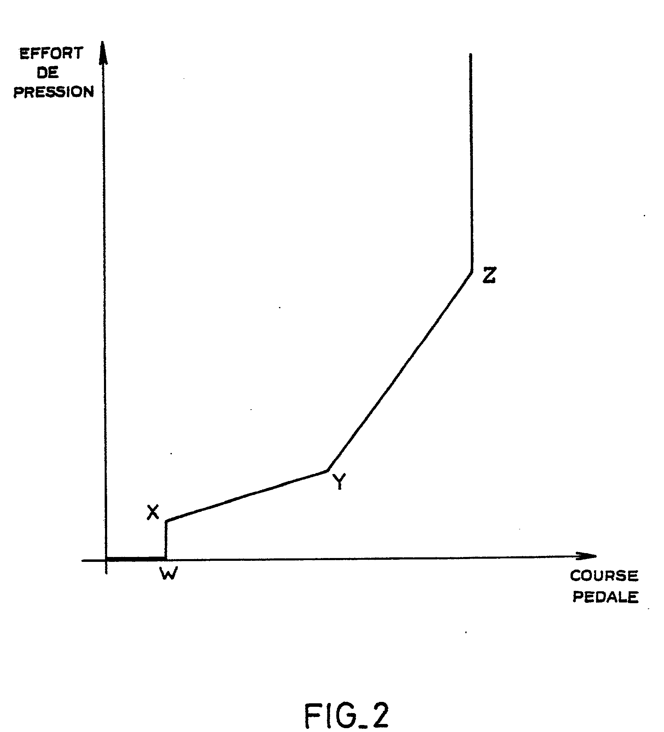

La mise en oeuvre du dispositif ainsi décrit est la suivante. Un effort appliqué par la pédale de freinage sur le piston 16 est transmis par le ressort 26 au deuxième piston 24 qui se déplace vers la gauche (en regardant les dessins), entraînant le déplacement de l'ensemble de clapet 38. Le déplacement de l'ensemble de clapet 38 provoque la fermeture par la bille 46 du siège 48. La première chambre de travail 60 est ainsi isolée du réservoir 106 mais la chambre intermédiaire 32 reste en communication avec le réservoir 106, et la première chambre 30, le joint 42 restant ouvert. Cette position correspond au point W sur la courbe de la Figure 2. Si l'effort sur la pédale continue à augmenter, la tige 50 du poussoir 43 dégage la bille 52 de son siège 53 (point X sur la courbe), permettant au fluide sous pression de passer par la première chambre de travail 60 vers le premier circuit de freinage 62. La montée en pression dans la première chambre de travail 60 provoque le déplacement du deuxième moyen de piston 56 entraînant la fermeture du siège 70 par la bille 68 et l'ouverture de la bille 78 par la tige 76. Le passage hydraulique entre la source haute pression 84 et le deuxième circuit de freinage 88 est ainsi ouvert.

Si l'effort sur la pédale continue, le ressort 26 fléchit permettant une course pédale représentée sur la figure 2 entre les points X et Y. Le liquide dans la première chambre 30 est refoulé par les passages 28 et 40 vers le réservoir 106. Au bout de cette course, l'élément de clapet 18 vient fermer le passage 28, isolant ainsi la première chambre 30 du réservoir basse pression 106. Cette position correspond au point Y sur la courbe de la figure 2. A partir de ce point, le fluide dans la première chambre 30 passe par le passage 112 vers la chambre 96, provoquant le déplacement du piston pilote 92 à l'encontre du ressort 102. La course pédale croît jusqu'au point Z sur la courbe, qui correspond au point où le premier piston 16 vient en butée contre le deuxième piston 24, par l'intermédiaire du poussoir 18.

Lors d'une défaillance de la source haute pression 54, le moyen de clapet 98 se déplace vers la gauche (en regardant les dessins) sous l'effet du ressort 100 et le joint 110 ferme le passage entre l'alésage 90 et le réservoir 106. Le piston pilote 92 est donc immobilisé. Lors d'une mise en oeuvre du dispositif, le premier piston 16 se déplace, entraînant la fermeture du siège 48 par la bille 46 et dégageant la bille 52 de son siège 53. Comme il n'y a pas de haute pression s'opposant au déplacement de l'ensemble de clapet 38, celui-ci continue à coulisser jusqu'à ce que le joint 42 vienne en butée contre le premier moyen de piston 34, fermant ainsi le passage entre la chambre intermédiaire 32 et le réservoir basse pression 106. Le fluide dans la première chambre 30 étant incompressible, le premier piston 16 et le premier moyen de piston 34 se déplacent ensemble envoyant le fluide se trouvant dans la première chambre de travail 60 vers le premier circuit de freinage 62 et déplaçant le deuxième moyen de piston 56.

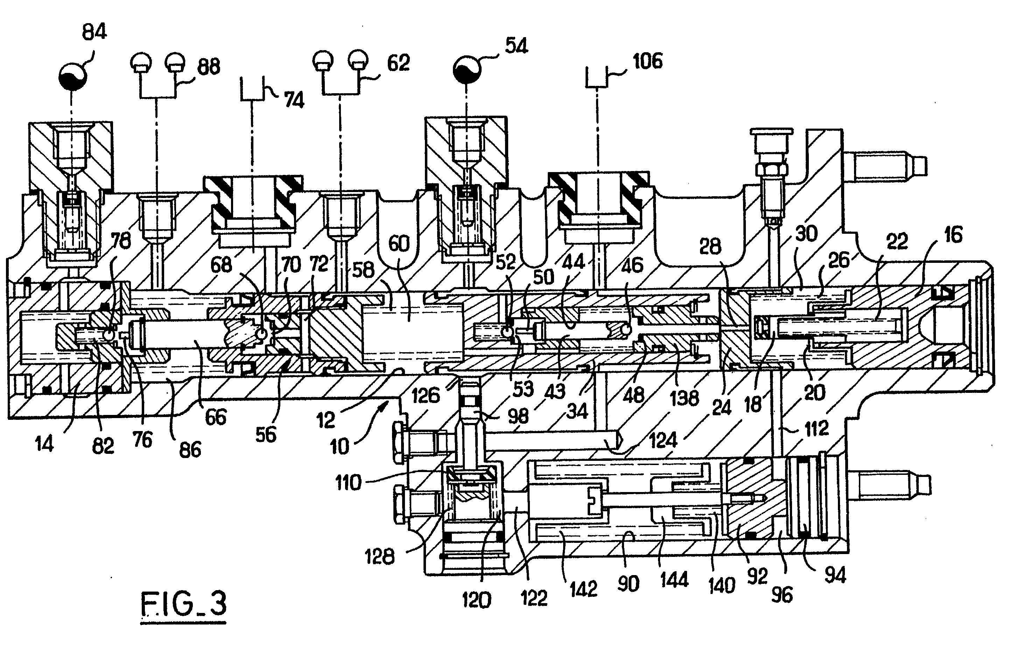

Dans le deuxième mode de réalisation représenté sur la figure 3 les éléments identiques ou analogues à ceux de la figure 1 portent les mêmes chiffres de référence.

Le dispositif de la figure 3 diffère de celui de la figure 1 en ce que l'ensemble de clapet 138 n'est pas muni d'un joint 42. Le piston pilote 92 est sollicité vers sa position en butée contre l'élément de fermeture 94 par un ensemble de deux ressorts 140 et 142 et une cage 144 disposés directement dans l'alésage 90. L'alésage 90 est relié à une chambre 120 par une ouverture 122. La chambre 120 communique avec le réservoir basse pression 106 par un passage 124. Un moyen de clapet 98 est monté à coulissement étanche dans un passage 126 en communication avec la source haute pression 54, et comporte un joint 110 destiné à fermer le passage 124 entre la chambre 120 et le réservoir 106 sous l'effet d'un ressort 128.

Lors d'une mise en oeuvre du dispositif le piston 16 se déplace et l'élément de clapet 18 vient en butée contre le deuxième piston 24 isolant la première chambre 30 du réservoir 106. Le déplacement résultant du premier piston 16 envoie le fluide se trouvant dans la première chambre 30 par le passage 112 vers la chambre 96, provoquant le déplacement du piston pilote 92. Le déplacement du piston pilote 92 comprime d'abord les deux ressorts 140 et 142. Le ressort 140 étant plus faible que le ressort 142, le piston pilote vient en butée contre la cage 144. Le déplacement du piston pilote 92 au-delà de cette position comprime seulement le ressort 142. Cette compression successive des deux ressorts 140 et 142 crée une pente brisée sensiblement identique à celle de la figure 2.

Lors d'une défaillance de la source haute pression 54, le moyen de clapet 98 se ferme sous l'effet du ressort 128, isolant ainsi la chambre 120 et l'alésage 90 du réservoir basse pression 106. Le piston pilote est donc rendu immobile.

On peut ainsi constater que, conformément à l'objet de l'invention, une course pédale progressive est assurée.

## Revendications

1. Dispositif d'assistance hydraulique comprenant un corps (10) comportant un premier alésage (12) dans lequel sont montés coulissant des premier et deuxième pistons (34, 56), le premier piston (34) étant déplaçable sous l'effet de l'actionnement d'un troisième piston (16) monté coulissant dans ledit premier alésage (12), et le deuxième piston (56) étant déplaçable par l'intermédiaire d'une liaison hydrostatique formée dans une chambre de travail (60), définie entre les premier et deuxième pistons (34, 56), à chaque piston (34, 56) étant respectivement associée une valve (52, 78) dans un circuit hydraulique respectif entre une source de fluide sous pression (54, 84) et un circuit de freinage respectif (62, 88); et une troisième chambre (30) définie dans le premier alésage (12) entre le premier piston (34) et le troisième piston (16), et reliée à un réservoir (106) de fluide sous basse pression par l'intermédiaire d'une valve (18, 28) se fermant au terme d'une course déterminée dudit troisième piston (16), caractérisé en ce qu'il comprend un deuxième alésage (90) dans lequel est monté à coulissement un piston pilote (92) déterminant avec une extrémité fermée (94) dudit deuxième alésage (90) une quatrième chambre (96) en communication hydraulique avec ladite troisième chambre (30), l'autre extrémité dudit deuxième alésage (90) étant en communication hydraulique avec le réservoir (106) de fluide sous basse pression par l'intermédiaire d'une valve (98, 110) commandée en fonction de la pression du fluide de la source de fluide sous pression (58), ledit piston pilote (92) étant déplaçable sous l'effet de la pression dans la dite troisième chambre (30) à l'encontre d'un premier ressort (102; 140, 144).

2. Dispositif selon la revendication 1, caractérisé en ce qu'il comprend, en outre, un deuxième ressort (26; 140, 142) agencé de façon à s'opposer aux déplacements du troisième piston (16) et du piston pilote (92).

3. Dispositif selon la revendication 2, caractérisé en ce que le deuxième ressort (26) est monté dans la première chambre (30).

4. Dispositif selon la revendication 2, caractérisé en ce que le deuxième ressort (140, 142) est monté dans ledit deuxième alésage (90).

5. Dispositif selon la revendication 4, caractérisé en ce que le deuxième ressort (140) est agencé de façon à être rendu inactif après un déplacement prédéterminé du piston pilote (92).

## Patentansprüche

1. Vorrichtung zur hydraulischen Kraftverstärkung, mit einem eine erste Bohrung (12) umfassenden Körper (10), wobei in der Bohrung ein erster Kolben (34) sowie ein zweiter Kolben (56) gleitend gelagert sind, wobei der erste Kolben (34) unter der Wirkung der Betätigung eines dritten Kolbens (16), welcher in der ersten Bohrung (12) gleitend gelagert ist, verschiebbar ist und der zweite Kolben (56) mittels einer hydrostatischen Verbindung, die in einer Arbeitskammer (60) gebildet ist, verschiebbar ist, welche zwischen dem ersten Kolben (34) und dem zweiten Kolben (56) bestimmt wird, wobei jedem Kolben (34, 56) ein Ventil (52, 58) in einem zugehörigen hydraulischen Kreis zwischen einer Druckfluidquelle (54, 84) und einem zugehörigen Bremskreis (62, 88) zugeordnet ist; sowie mit einer dritten Kammer (30), welche in der ersten Bohrung (12) zwischen dem ersten Kolben (34) und dem dritten Kolben (16) gebildet ist und mit einem Niederdruck-Fluidbehälter (106) über ein Ventil (18, 28) verbunden ist, das nach Beendigung eines bestimmten Hubweges dieses dritten Kolbens (16) schließt, dadurch gekennzeichnet, daß sie eine zweite Bohrung (90) umfaßt, in welcher ein Pilotkolben (92) gleitend gelagert ist, welcher mit einem geschlossenen Ende (94) der zweiten Bohrung (90) eine vierte, mit der dritten Kammer (30) in hydraulischer Verbindung stehenden Kammer (96) bildet, wobei das andere Ende der zweiten Bohrung (90) mit dem Niederdruck-Fluidbehälter (106) über ein Ventil (98, 110) in hydraulischer Verbindung steht, das in Abhängigkeit von dem Fluiddruck der Druckfluidquelle gesteuert wird, wobei dieser Pilotkolben (92) unter der Wirkung des Druckes in der dritten Kammer (30) entgegen einer ersten Feder (102; 140, 144) verschiebbar ist.

2. Vorrichtung nach Anspruch 1, dadurch gekennzeichnet, daß sie ferner eine zweite Feder (26; 140, 142) umfaßt, welche so angeordnet ist, daß sie den Verschiebungen des dritten Kolbens (16) sowie des Pilotkolbens (92) entgegenwirkt.

3. Vorrichtung nach Anspruch 2, dadurch gekennzeichnet, daß die zweite Feder (26) in der ersten Kammer (30) angebracht ist.

4. Vorrichtung nach Anspruch 2, dadurch gekennzeichnet, daß die zweite Feder (140, 142) in der zweiten Bohrung angebracht ist.

5. Vorrichtung nach Anspruch 4, dadurch gekennzeichnet, daß die zweite Feder (140) so angeordnet ist, daß sie nach einer bestimmten Verschiebung des Pilotkolbens (92) inaktiviert wird.

## Claims

1. Hydraulic booster device comprising a body (10) having a first bore (12) in which first and second pistons ( 34, 56) are slideably mounted, the first piston (54) being displaceable under the effect of the actuation of a third piston (16) slideably mounted in the said first bore (12), and the second piston (56) being diaplaceable by means of a hydrostatic connection formed in a working chamber (60) defined between the first and second pistons (34, 56), there being respectively associated with each piston (34, 56) a valve (52, 78) in a respective hydraulic circuit between a pressurized-fluid source (54, 84) and a respective brake circuit (62, 88); and a third chamber (30) defined in the first bore (12) between the first piston (34) and the third piston (16), and connected to a reservoir (106) of fluid under low pressure by means of a valve (18, 28) which closes at the end of a specific stroke of, the said third piston (16), characterized in that it has a second bore (90), in which is slideably mounted a pilot piston (92) determining, together with a closed end (94) of the said second bore (90), a fourth chamber (96) in hydraulic communication with the said third chamber (30), the other end of the said second bore (90) being in hydraulic communication with the reservoir (106) of fluid under low pressure by means of a valve (98, 110) controlled as a function of the pressure of the fluid of the pressurized fluid source (58), the said pilot piston (92) being displaceable under the effect of the pressure in the said third chamber (30) counter to a first spring (102; 140, 144).

2. Device according to Claim 1, characterized in that it also comprises a second spring (26, 140, 142) arranged in such a manner as to obstruct the displacements of the third piston (16) and of the pilot piston (92).

3. Device according to Claim, 2, characterized in that the second spring (26) is mounted in the first chamber (30).

4. Device according to Claim 2, characterized in that the second spring (140, 142) is mounted in the said second bore (90).

5. Device according to Claim 4, characterized in that the second spring (140) is arranged in such a way as to be rendered inactive after a predetermined displacement of the pilot piston (92).

FIG.1

EP 0 247 913 B1

FIG_2

FIG_3